# EUROPÄISCHE PATENTSCHRIFT

(11) **EP 1 247 938 B1**
(45) Veröffentlichungstag und Bekanntmachung des Hinweises auf die Patenterteilung: **24.01.2007**
(21) Anmeldenummer: 02006063.8
(22) Anmeldetag: 18.03.2002
(51) Int. Cl.: F01D 5/14, F01D 9/04

(54) **Verfahren zur Relativpositionierung von Stator- oder Rotorschaufeln**
Clocking of stator- or rotorblades
Méthode de positionnement des aubes statoriques ou rotoriques

(30) Priorität: 30.03.2001 DE 10115947
(43) Veröffentlichungstag der Anmeldung: 09.10.2002
(73) Patentinhaber: Deutsches Zentrum für Luft- und Raumfahrt e.V., 51147 Köln (DE)
(72) Erfinder: Hummel, Frank, 37075 Göttingen (DE)
(74) Vertreter: Rehberg Hüppe + Partner

(56) Entgegenhaltungen:
- US-A- 5 486 091
- MEYER J: "UNTERSUCHUNG DER STROEMUNG HINTER EBENEN TRANSSONISCHEN TURBINENSCHAUFELGITTERN" BWK BRENNSTOFF WARME KRAFT, SPRINGER VDI VERLAG, DUSSELDORF, DE, Bd. 25, Nr. 6, Juni 1973 (1973-06), Seiten 240-247, XP009053706 ISSN: 1618-193X
- EULITZ FRANCK: "Numerische Simulationen und Modellierung der instationären Strömung in Turbomaschinen" April 2000 (2000-04), DLR - DEUTSCHES ZENTRUM FÜR LUFT- UND RAUMFAHRT E.V. , KÖLN , XP002351150 * Seite 119 - Seite 149 *
- ENGEL KARL: "Numerische Simulation der instationären Strömung in Turbomaschinenkomponenten" April 1997 (1997-04), DLR - DEUTSCHES ZENTRUM FÜR LUFT- UND RAUMFAHRT E.V. , KÖLN , XP002351151 * Seite 95 - Seite 110 *
- HUMMEL F: "WAKE-WAKE INTERACTIONS AND ITS POTENTIAL FOR CLOCKING IN A TRANSONIC HIGH PRESSURE TURBINE" ASME PAPER, XX, XX, Nr. 2001-GT-302, 2001, Seiten 1-9, XP009053708

## Beschreibung

Die Erfindung bezieht sich auf ein Verfahren zur Relativpositionierung von zwei in einer Hochdruckturbine unter Zwischenordnung eines Rotors aufeinander folgenden Statoren, wobei ein Strömungsfeld durch den ersten Stator und den Rotor für einen Regelbetriebszustand der Hochdruckturbine berechnet wird, um in dem Strömungsfeld hinter dem Rotor die Lage eines Ereignisses zu bestimmen, das in Umfangsrichtung die geometrischen Periode des ersten Stators aufweist, und wobei der zweite Stator zumindest bezüglich der Vorderkanten seiner Schaufeln relativ zu der Lage dieses Ereignisses positioniert wird. Weiterhin bezieht sich die Erfindung auf ein entsprechendes Verfahren zur Relativpositionierung von zwei in einer Hochdruckturbine unter Zwischenordnung eines Stators aufeinander folgenden Rotoren, mit den Merkmalen des Oberbegriffs des Anspruchs 6.

Es geht also darum, die Relativpositionierung von zwei relativ zueinander ruhenden Schaufelanordnungen festzulegen, zwischen denen eine relativ zu ihnen rotierende Schaufelanordnung liegt.

Das aerodynamische Design des Hochdruckbereichs moderner Gasturbinen, hier als Hochdruckturbinen bezeichnet, hat sowohl im Bereich der Flugzeugantriebe als auch im Bereich der stationären Stromerzeugung einen Stand erreicht, bei dem signifikante Verbesserungen der Wirkungsgrade einzelner Komponenten nicht mehr zu erreichen sind. Daher geht eine Tendenz dahin, bei gleichbleibendem Wirkungsgrad die Bauteilzahl einer Hochdruckturbine zu reduzieren, um Herstellungs- und Wartungskosten zu minimieren. Dies führt jedoch zu einer Erhöhung der Belastung der verbleibenden Bauteile. Insbesondere im Turbinenteil einer Gasturbine führt die stärkere Belastung zu sogenannten transsonischen Strömungszuständen der Schaufelumströmung, d. h. lokal werden Überschallgeschwindigkeiten erreicht. Soweit dies in einem Regelbetriebszustand, d. h. also beispielsweise beim Reiseflug im Fall eines Flugzeugantriebs oder im Dauerbetrieb einer Gasturbine zur Stromerzeugung zutrifft, kann von einem transsonischen Regelbetriebszustand gesprochen werden.

Bei einem transsonischen Regelbetriebszustand bilden sich in der Hochdruckturbine Verdichtungsstöße an Schaufelhinterkanten aus. Solche Verdichtungsstöße markieren eine sprunghafte Änderung der lokalen Strömungsgeschwindigkeit von Überschall auf Unterschall, die mit einem sprunghaften Druckanstieg über den Stoß verbunden ist. Bei der folgenden Betrachtung der Auswirkungen dieser Verdichtungsstöße wird davon ausgegangen, daß sie von den Schaufeln eines Rotors ausgehen, der vor einem Stator angeordnet ist, die Betrachtung gilt jedoch grundsätzlich auch für den umgekehrten Fall. Die von den Hinterkanten der Schaufeln des Rotors ausgehenden Verdichtungsstöße treffen periodisch auf die in axialer Richtung dahinter angeordneten Schaufeln des Stators. Der starke Druckgradient der aus der Sicht des Stators umlaufenden Verdichtungsstöße des Rotors führt zu periodischen Strömungsablösungen und Schwingungsanregungen der Schaufeln des Stators. Die periodischen Strömungsablösungen verschlechtern den Wirkungsgrad des Stators; die Schwingungsanregungen reduzieren die Bauteillebensdauer des Stators. Um die Verdichtungsstoßstärke aus Sicht eines Stators hinter einem transsonisch durchströmten Rotor zu reduzieren, ist es bekannt, den Stator in einem relativ großen Abstand hinter dem Rotor anzuordnen, in dem sich die Verdichtungsstöße bereits abgeschwächt haben. Hierdurch erhöht sich jedoch nicht nur die Baugröße einer Hochdruckturbine, sondern es sinkt auch ihr Wirkungsgrad ab.

Es ist die Aufgabe der Erfindung, ein Verfahren der eingangs beschriebenen Art zur Relativpositionierung von zwei in einer Hochdruckturbine unter Zwischenordnung eines Rotors aufeinander folgenden Statoren bzw. ein Verfahren zur Relativpositionierung von zwei in einer Hochdruckturbine unter Zwischenordnung eines Stators aufeinanderfolgenden Rotoren nach dem Oberbegriff des Anspruchs 6 aufzuzeigen, die ohne Baulängenvergrößerung die Einflüsse von Verdichtungsstößen, welche sich von transsonisch durchströmten Schaufelanordnungen ablösen, auf die Bauteilslebensdauer nachgeordneter Schaufelanordnungen reduzieren.

Aus der US 5 486 091 ist ein Verfahren zur Optimierung des Wirkungsgrads einer Gasturbine mit aufeinander folgenden Statoren und Rotoren bekannt, das die Merkmale des Verfahrens der eingangs beschriebenen Art bzw. des Verfahrens nach dem Oberbegriff des Anspruchs 6 aufweist. Es wird das Strömungsfeld durch die vorderen zwei von drei aufeinanderfolgenden Schaufelanordnungen mit jeweils gleicher Schaufelzahl berechnet, wobei die mittlere Schaufelanordnung relativ zu den äußeren Schaufelanordnungen rotiert, während die äußeren Schaufelanordnungen eine fixe Relativposition aufweisen. Die Optimierung' der Position der äußeren Schaufelanordnung, die in Strömungsrichtung hinten liegt, soll so erfolgen, daß Nachläufe der ersten Schaufelanordnung, die durch die rotierende zweite Schaufelanordnung hindurchtreten, im Bereich der Vorderkanten auf die Schaufeln der hinteren Schaufelanordnung auftreffen. Die US 5 486 091 berücksichtigt dabei nur subsonische Regelbetriebszustände und befaßt sich entsprechend nicht mit auftretenden Verdichtungsstößen und deren Auswirkungen auf nachfolgende Schaufelanordnungen.

Die Aufgabe der Erfindung wird bei einem Verfahren zur Relativpositonierung von zwei in einer Hochdruckturbine unter Zwischenordnung eines Rotors aufeinander folgenden Statoren der eingangs beschriebenen Art dadurch gelöst, daß das Strömungsfeld für einen transsonischen Regelbetriebszustand der Hochdruckturbine mit transsonischer Durchströmung des Rotors berechnet wird, um die Lage von Differenzdruckmaxima von Verdichtungsstößen hinter dem Rotor zu bestimmen, und daß der zweite Stator so positioniert wird, daß zumindest die Vorderkanten seiner Schaufeln nicht in dem Bereich der Differenzdruckmaxima liegen.

Ein Verfahren zur Relativpositionierung von zwei in einer Hochdruckturbine unter Zwischenordnung eines Stators aufeinanderfolgenden Rotoren löst die Aufgabe der Erfindung entsprechend durch die Merkmale des Anspruchs 6.

Die folgende Beschreibung beschränkt sich weiter auf den Fall der Relativpositionierung von zwei in einer Hochdruckturbine unter Zwischenordnung eines Rotors aufeinanderfolgenden Statoren, obwohl der andere Fall gleichwertig ist und sich seine Beschreibung immer durch Austausch der Worte Stator und Rotor ergibt.

Bei der Erfindung wird das Strömungsfeld für einen Regelbetriebszustand der Hochdruckturbine berechnet, in dem eine transsonische Durchströmung des Rotors auftritt, d. h. für einen transsonischen Regelbetriebszustand. Ziel ist es dabei, die Verdichtungsstöße hinter dem Rotor einer genaueren Analyse zu unterziehen. Hierbei stellt sich heraus, daß jeder der Verdichtungsstöße zwar mit der jeweiligen Schaufel, an der er auftritt, d. h. mit dem Rotor, umläuft, doch ist dabei der Differenzdruck über den Verdichtungsstoß in Umfangs- bzw, Drehrichtung des Rotors nicht konstant. Vielmehr ergibt sich eine Variation mit der Periode der Schaufelanordnung des vor dem Rotor liegenden ersten Stators. Diese Variation weist eine nennenswerte Amplitude auf, d. h. es gibt Bereiche maximalen Differenzdrucks bzw. Differenzdruckmaxima und Bereiche minimalen Differenzdrucks bzw. Differenzdruckminima. Das absolute Niveaus der Differenzdruck fällt überdies nicht kontinuierlich mit dem axialen Abstand von dem Rotor ab, sondern dieser Abfall ist mit einer Variation überlagert. Wenn verhindert wird, daß die Schaufeln des zweiten Stators, zumindest aber die Vorderkanten dieser Schaufeln, in dem Bereich der Differenzdruckmaxima hinter dem Rotors liegen, wird der Einfluß der Verdichtungsstöße auf den zweiten Stator wie gewünscht klein gehalten.

Bei gegebener axialer Position des zweiten Stators kann seine Position in Umfangsrichtung nur so optimiert werden, daß seine Schaufeln bzw. deren Vorderkanten den Bereich der Differenzdruckmaxima der Verdichtungsstöße aussparen. Eine weitergehende Optimierung der Position des zweiten Rotors, um seine Schaufeln möglichst nur im Bereich von Differenzdruckminima der Verdichtungsstöße anzuordnen, kann erfordern, auch die achsiale Position des zweiten Stators zu variieren. Dabei ist es klar, daß es bei den hier angesprochenen Differenzdruckminima wie bei den Differenzdruckmaxima um lokale Extremwerte im Bereich der aus anderen Gesichtspunkten möglichen Positionierung des zweiten Stators geht.

Besonderes Augenmerk gilt bei der erfindungsgmäßen Positionierung den Vorderkanten der Schaufeln des zweiten Stators. Vorteilhaft ist es jedoch, wenn die gesamten Schaufeln in dem Bereich der Differenzdruckminima der Verdichtungsstöße angeordnet werden können. Eine nach diesem Kriterium durchgeführte Positionierung des zweiten Stators führt sogar dazu, daß der zweite Stator im Gegensatz zu dem bekannten Stand der Technik verhältnismäßig nahe an dem davorliegenden Rotor angeordnet wird, um die Einflüsse der Verdichtungsstöße auf den zweiten Stator zu minimieren.

Daß Strömungsfeld kann auf an sich bekannte Weise numerisch berechnet werden. Geeignet sind beispielsweise numerische Simulationsverfahren, wie sie in K. Engel "Numerische Simulation der stationären Strömung in Turbomaschinenkomponenten" DLR Forschungsbericht DLR-FB 97/19 und F. Eulitz "Numerische Simulation und Modellierung der instationären Störung in Turbomaschinen" DLR Forschungsbericht DLR-FB 2000-05 beschrieben sind. Entsprechende Simulationsprogramme sind kommerziell vom Institut für Antriebstechnik des DLR-Köln, Projektgruppe numerische Simulation, erhältlich. Andere für die Berechnung des Strömungsfelds geeignete Simulationsprogramme werden von Computational Fluid Dynamix AEA Techology GmbH, Ottofing, Fluid Deutschland GmbH, Darmstadt und Numeca Deutschland, Wendelstein vertrieben. Die interessierenden Verdichtungsstöße und hier insbesondere die relevanten Druckdifferenzen sind besonders gut in einem Druck- oder einem hieraus resultierenden Geschwindigkeitsfeld zu verfolgen.

Wie bereits angedeutet wurde, resultieren die Variationen des Differenzdrucks der Verdichtungsstöße hinter dem Rotor aus Einflüssen des vor dem Rotor liegenden ersten Stators auf das Strömungsfeld. So verursachen die Schaufeln des ersten Stators aufgrund der viskosen Eigenschaften der Gasströmung Nachläufe, die von den dahinter laufenden Schaufeln des Rotors in Umfangsrichtung zerschnitten und in axialer Richtung weitergeleitet werden. Trotz der Umfangsbewegung des Rotors verlassen die von den Schaufeln des Rotors abgeschnittenen Nachlaufsegmente einer Schaufel des ersten Stators den Rotor stets an derselben Umfangsposition, solange sich die Hochdruckturbine in demselben Regelbetriebszustand befindet. Die Verdichtungsstöße, die von der Hinterkante der Schaufeln des Rotors ausgehen, bewegen sich mit dem Rotor und erfahren aus Sicht des Rotors eine Modulation durch die Schaufelnachläufe von dem ersten Stator. Diese Modulation führt zu der Differenzdruckmodulation am Ort des ruhenden zweiten Stators. Daher befindet sich die optimale Position der Schaufel des zweiten Stators zur Reduktion der Einflüsse der Verdichtungsstöße in dem Bereich hinter dem Rotor, in dem sich die Verdichtungsstöße periodisch mit den Nachläufen der Schaufeln des ersten Stators überlagern. Besonders bevorzugt ist es, wenn Sie sich gleichzeitig auch mit Nachläufen von in Umflaufrichtung des Rotors weiter vorne liegenden Schaufeln zusätzlich überlagern. Unter Berücksichtigung dieser Punkte kann die Auswirkung der Verdichtungsstöße auf die Schaufel des zweiten Stator und bis zu 50 % reduziert werden, verglichen mit einer ungünstigen Postion des Stators, in der die Verdichtungsstöße von dem Rotor mit ihren Differenzdruckmaxima auf die Schaufeln des Stators auftreffen.

Die Erfindung wird anhand eines Ausführungsbeispiels unter Bezugnahme auf die beigefügten Figuren näher erläutert und beschrieben, wobei
- Fig. 1: hintereinander angeordnete Schaufeln eines ersten Stators, eines Rotors und eines zweiten Stators mit der Lage der auftretenden Schaufelnachläufe und Verdichtungsstöße zeigt,
- Fig. 2: eine Darstellung des Drucks über der Umfangsrichtung und der Zeit für eine bestimmte Position hinter den Schaufeln des Rotors in Fig. 1 ist und
- Fig. 3: Amplitude der Differenzdruckvariation zwischen den Differenzdruckmaxima und den Differenzdruckminima in Abhängigkeit von dem axialen Abstand zu dem Rotor zeigt.

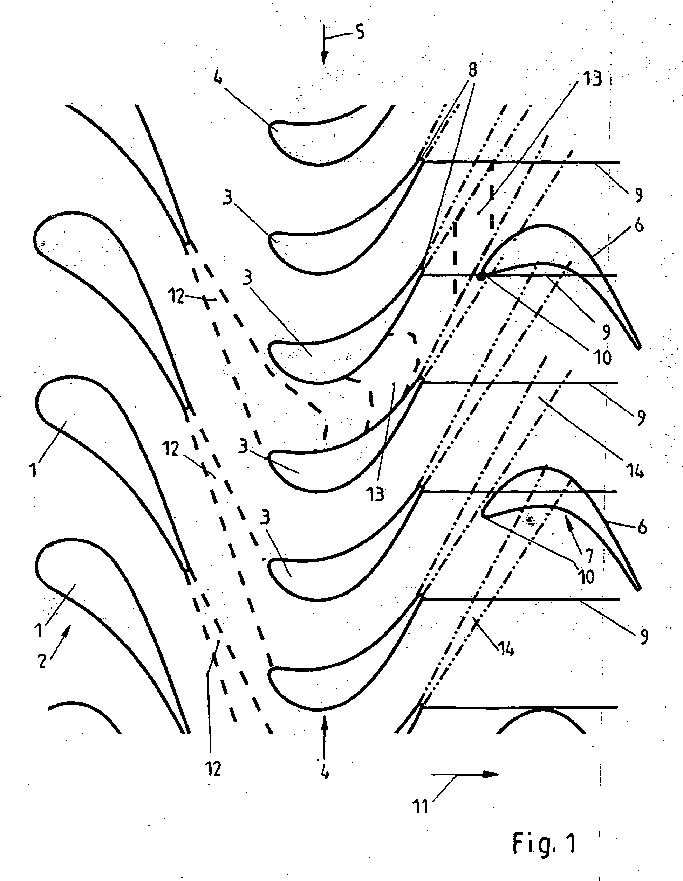

Fig. 1 zeigt als für die Erfindung wesentliche Teile einer Hochdruckturbine Schaufeln 1 eines ersten Stators 2, Schaufeln 3 eines dahinterliegenden Rotors 4, die sich in Bezug auf die Schaufeln 1 in Richtung eines Pfeils 5 bewegen, die der Umfangsrichtung des Rotors 4 entspricht, und Schaufeln 6 eines Stators 7 hinter dem Rotor 4. Fig. 1 zeigt in einem begrenzten Bereich das Profil der jeweiligen Schaufeln 1, 3 und 6 am Umfang der Schaufelanordnungen. Der Rotor 4 wird transsonisch durchströmt, d. h. es treten zumindest lokale Überschallströmungen auf. Hierdurch bilden sich an den Hinterkanten 8 der Schaufeln 3 des Rotors 4 Verdichtungsstöße 9 aus, die durch hohe Differenzdrücke gekennzeichnet sind. Diese Verdichtungsstöße 9 treffen auf die Schaufeln 6 des zweiten Stators 7 auf, wobei insbesondere die vorne liegenden Vorderkanten 10 der Schaufeln 6 relevant sind, weil dort die Verdichtungsstöße am wenigsten gealtert und deshalb noch am wenigsten abgeschwächt sind. Die Verdichtungsstöße sind aber auch in Richtung des Pfeils 5 gesehen nicht überall gleich stark, d. h. sie weisen nicht überall denselben Differenzdruck auf. Auch in der axialen Richtung eines Pfeils 11 tritt eine Variation des Differenzdrucks zusätzlich zu der Alterung der Verdichtungsstöße auf. In der Umfangsrichtung des Pfeils 5 wird eine Variation der Verdichtungsstöße aufgrund von Nachläufen 12 beobachtet, die durch die Schaufeln 3 des Rotors 4 in Nachlaufsegmente 13 zerschnitten werden. Diese Nachlaufsegmente überlagern sich mit den Verdichtungsstößen, wobei es zu einer Reduktion des Differenzdrucks der Verdichtungsstöße in dem Überlagerungsbereich kommt. Daneben tritt ein Einfluß von Nachläufen 14 der Schaufel 3 des Rotors auf. Auch diese Nachläufe 14 überlagern sich mit den Verdichtungsstößen. Hierdurch kommt es zu einer Variation der Druckdifferenz der Verdichtungsstöße zwar nicht in Richtung des Pfeils 5 aber in Richtung des Pfeils 11. In diese Richtung variiert der Einfluß der Nachlaufsegemente 13 von dem ersten Stator 2 zusätzlich. Entsprechend ist die in Fig. 1 dargestellte Position der Schaufel 6 des zweiten Stators 7 als günstig anzusehen, weil sich die Vorderkanten 10 der Schaufeln 6 nicht im Bereich der Druckdifferenzmaxima der Verdichtungsstöße 9 befinden, sondern dort, wo aufgrund der destruktiven Überlagerung der Verdichtungsstöße 9 mit den Nachlaufsegmenten 13 und den Nachläufen 14 Differenzdruckminima beobachtet werden. So wird die Beanspruchung des zweiten Stators 7 in dieser Relativposition zu dem ersten Stator 2 minimiert. In einer anderen Relativposition des zweiten Stators 7 in der axialen Richtung des Pfeils 11 ist auch seine bevorzugte Position in der Umfangsrichtung des Pfeils 5 eine andere. Eine optimale Positionierung des Stators 7 relativ zu dem Stator 2 und dem Rotor 4 beinhaltet neben einer Optimierung in Umfangsrichtung des Pfeils 5 auch eine Optimierung in der axialen Richtung des Pfeils 11, um auch die Nachläufe 14 der Rotorschaufeln 3 zur destruktiven Überlagerung der Verdichtungsstöße bei Ihrem Auftreffen auf die Vorderkanten 10 der Schaufeln 6 des Stators 7 auszunutzen.

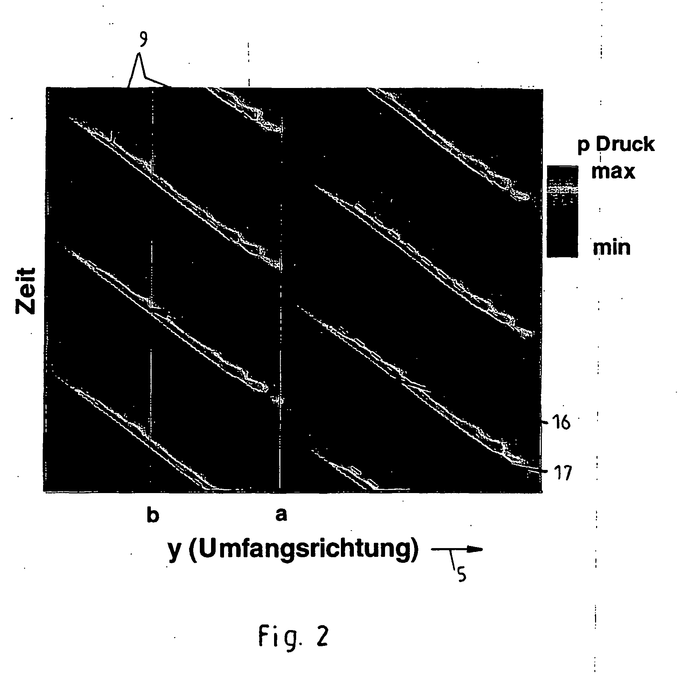

Fig. 2 zeigt für eine feste Position in Richtung des Pfeils 11 hinter dem Rotor 4 den zeitlichen Verlauf der Druckdifferenz der Verdichtungsstöße 9 aufgetragen über der Umfangsrichtung des Pfeils 5. Hieraus ist zu erkennen, daß es in einer Umfangsposition "b" zur Entwicklung von Differenzdruckmaxima 16 der Verdichtungsstöße 9 kommt, weil die Verdichtungsstöße hier ungestört sind. Demgegenüber kommt es in einer Umfangsposition "a" durch die im Zusammenhang mit Fig. 1 erläuterten destruktiven Überlagerungen zur Abschwächung der Verdichtungsstöße bis auf Differenzdruckminima 17. Entsprechend ist für die Schaufeln 6 bzw. ihre Vorderkanten 10 eine Umfangsposition bei "a" zu wählen bzw. eine Umfangsposition bei "b" zu vermeiden.

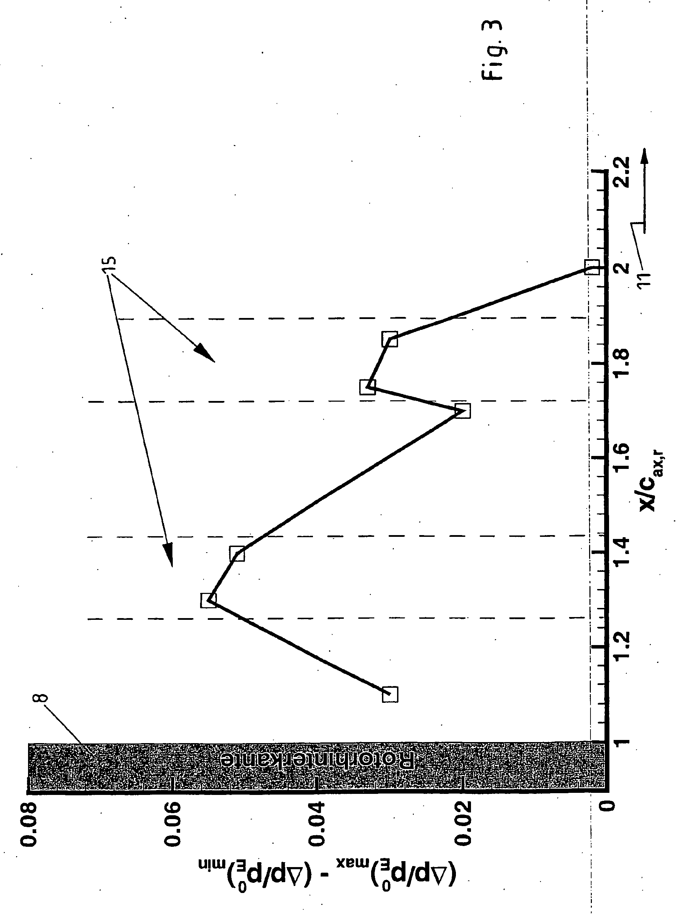

Aus Figur 3, in der die Amplitude der normierten Differenzdruckvariation zwischen den Differenzdruckminima und den Differenzdruckmaxima über dem normierten Abstand zur Hinterkante der Schaufeln des Rotors aufgetragen ist, zeigt starke Schwankungen dieser Amplitude. Dabei weisen Bereiche 15, in denen die Amplitude (lokale) Maximalwerte annimmt, nicht nur auf ein großes Reduktionspotential in Bezug auf negative Auswirkungen der Verdichtungsstöße hin, das mit dem erfindungsgemäßen Verfahren durch Variation der Position des zweiten Stators in Umfangsrichtung realisierbar ist. In diesen Bereichen des axialen Abstands zu dem Rotor besteht zusätzlich die Möglichkeit, daß die Schaufeln des zweiten Stators eine auch in axialer Richtung des Pfeils 11 optimierte Position einnehmen, d. h. eine Position innerhalb von Differenzdruckminima unter Betrachtung sowohl der Umfangsrichtung als auch der axialen Richtung.

### BEZUGSZEICHENLISTE

- 1 -: Schaufel
- 2 -: Stator
- 3 -: Schaufel
- 4 -: Rotor
- 5 -: Pfeil
- 6 -: Schaufel
- 7 -: Stator
- 8 -: Hinterkante
- 9 -: Verdichtungsstoß
- 10 -: Vorderkante

- 11 -: Pfeil
- 12 -: Nachlauf
- 13 -: Nachlaufsegment
- 14 -: Nachflauf
- 15 -: Bereich
- 16 -: Differenzdruckmaximum
- 17 -: Differenzdruckminimum

## Patentansprüche

1. Verfahren zur Relativpositionierung von zwei in einer Hochdruckturbine unter Zwischenordnung eines Rotors aufeinander folgenden Statoren, wobei ein Strömungsfeld durch den ersten Stator und den Rotor für einen Regelbetriebszustand der Hochdruckturbine berechnet wird, um in dem Strömungsfeld hinter dem Rotor die Lage eines Ereignisses zu bestimmen, das in Umfangsrichtung die geometrischen Periode des ersten Stators aufweist, und wobei der zweite Stator zumindest bezüglich der Vorderkanten seiner Schaufeln relativ zu der Lage dieses Ereignisses positioniert wird, **dadurch gekennzeichnet, daß** das Strömungsfeld für einen transsonischen Regelbetriebszustand der Hochdruckturbine mit transsonischer Durchströmung des Rotors (3) berechnet wird, um die Lage von Differenzdruckmaxima (16) von Verdichtungsstößen (9) hinter dem Rotor (3) zu bestimmen, und daß der zweite Stator (7) so positioniert wird, daß zumindest die Vorderkanten (10) seiner Schaufeln (6) nicht in dem Bereich der Differenzdruckmaxima (16) liegen.

2. Verfahren nach Anspruch 1, **dadurch gekennzeichnet, daß** der zweite Stator (7) in seiner Umfangsrichtung (5) und seiner Achsrichtung (11) so positioniert wird, daß zumindest die Vorderkanten (10) seiner Schaufeln (6) in dem Bereich von Differenzdruckminima (17) der Verdichtungsstöße (9) liegen.

3. Verfahren nach Anspruch 1 oder 2, **dadurch gekennzeichnet, daß** das Strömungsfeld als Druck- und/oder Geschwindigkeitsfeld numerisch berechnet wird.

4. Verfahren nach einem der Ansprüche 1 bis 3, **dadurch gekennzeichnet, daß** der zweite Stator (7) so positioniert wird, daß die Vorderkanten (10) seiner Schaufeln in einem Bereich liegen, in dem die Verdichtungsstöße (9) mit Nachläufen (12, 13) von Schaufeln (1) des ersten Stators (2) überlagert sind.

5. Verfahren nach einem der Ansprüche 1 bis 4, **dadurch gekennzeichnet, daß** der zweite Stator (7) so positioniert wird, daß die Vorderkanten (10) seiner Schaufeln (6) in einem Bereich liegen, in dem die Verdichtungsstöße (9) mit Nachläufen (14) von Schaufeln (3) des Rotors (4) überlagert sind.

6. Verfahren zur Relativpositionierung von zwei in einer Hochdruckturbine unter Zwischenordnung eines Stators aufeinander folgenden Rotoren, wobei ein Strömungsfeld durch den ersten Rotor und den Stator für einen Regelbetriebszustand der Hochdruckturbine berechnet wird, um in dem Strömungsfeld hinter dem Stator die Lage eines Ereignisses zu bestimmen, das in Umfangsrichtung die geometrische Periode des ersten Rotors aufweist, und wobei der zweite Rotor zumindest bezüglich der Vorderkanten seiner Schaufeln relativ zu der Lage dieses Ereignisses positioniert wird, **dadurch gekennzeichnet, daß** das Strömungsfeld für einen transsonischen Regelbetriebszustand der Hochdruckturbine mit transsonischer Durchströmung des Rotors berechnet wird, um die Lage von Differenzdruckmaxima von Verdichtungsstößen hinter dem Stator zu bestimmen, und daß der zweite Rotor so positioniert wird, daß zumindest die Vorderkanten seiner Schaufeln nicht in dem Bereich der Differenzdruckmaxima liegen.

7. Verfahren nach Anspruch 6, **dadurch gekennzeichnet, daß** der zweite Rotor in seiner Umfangsrichtung und seiner Achsrichtung so positioniert wird, daß zumindest die Vorderkanten seiner Schaufeln in dem Bereich von Differenzdruckminima der Verdichtungsstöße liegen.

8. Verfahren nach Anspruch 6 oder 7, **dadurch gekennzeichnet, daß** das Strömungsfeld als Druck- und/oder Geschwindigkeitsfeld numerisch berechnet wird.

9. Verfahren nach einem der Ansprüche 6 bis 8, **dadurch gekennzeichnet, daß** der zweite Rotor so positioniert wird, daß zumindest die Vorderkanten seiner Schaufeln in einem Bereich liegen, in dem die Verdichtungsstöße: mit Nachläufen von Schaufeln des ersten Rotors überlagert sind.

10. Verfahren nach einem der Ansprüche 6 bis 9, **dadurch gekennzeichnet, daß** der zweite Rotor so positioniert wird, daß zumindest die Vorderkanten seiner Schaufeln in einem Bereich liegen, in dem die Verdichtungsstöße mit Nachläufen von Schaufeln des Stators überlagert sind.

## Claims

1. Method of positioning two stators with regard to each other, which follow each other in a high pressure turbine with a rotor being arranged in between, wherein a flow field through the first stator and the rotor is calculated for a standard operation condition of the high pressure turbine to determine the position of an event in the flow field behind the rotor, the event having the geometric periodicity of the first stator in circumferential direction, and wherein the second rotor, at least in respect of the leading edges of its blades, is positioned with regard to the position of this event, **characterized in that** the flow field is calculated for a transsonic standard operation condition of the high pressure turbine with transsonic flow through the rotor (3) to determine the position of pressure difference maxima (16) of shocks (9) behind the rotor (3), and that the second stator (7) is positioned in such a way that at least the leading edges (10) of its blades (6) are not positioned in the area of the pressure difference maxima (16).

2. Method of claim 1, **characterized in that** the second stator (7) is positioned in its circumferential direction (5) and its axle direction (11) in such a way that the leading edges (10) of its blades (6) are positioned in the area of pressure difference minima (17) of the shocks (9).

3. Method of claim 1 or 2, **characterized in that** the flow field is numerically calculated as a pressure and/or velocity field.

4. Method of any of the claims 1 to 3, **characterized in that** the second stator (7) is positioned in such a way that the leading edges (10) of its blades are positioned in an area in which the shocks (9) are superimposed with wakes (12, 13) from blades (1) of the first stator (2).

5. Method of any of the claims 1 to 4, **characterized in that** the second stator (7) is positioned in such a way that the leading edges (10) of its blades (6) are arranged in an area in which the shocks (9) are superimposed with wakes (14) from blades (3) of the rotor (4).

6. Method of positioning two rotors with regard to each other, which follow each other in a high pressure turbine with a stator being arranged in between, wherein a flow field through the first rotor and the stator is calculated for a standard operation condition of the high pressure turbine to determine the position of an event in the flow field behind the stator, the event having the geometric periodicity of the first rotor in circumferential direction, and wherein the second stator, at least in respect of the leading edges of its blades, is positioned with regard to the position of this event, **characterized in that** the flow field is calculated for a transsonic standard operation condition of the high pressure turbine with transsonic flow through the stator to determine the position of pressure difference maxima of shocks behind the stator, and that the second rotor is positioned in such a way that at least the leading edges of its blades are not positioned in the area of the pressure difference maxima.

7. Method of claim 6, **characterized in that** the second rotor is positioned in its circumferential direction and its axle direction in such a way that the leading edges of its blades are positioned in the area of pressure difference minima of the shocks.

8. Method of claim 6 or 7, **characterized in that** the flow field is numerically calculated as a pressure and/or velocity field.

9. Method of any of the claims 1 to 3, **characterized in that** the second rotor is positioned in such a way that the leading edges of its blades are positioned in an area in which the shocks are superimposed with wakes from blades of the first rotor.

10. Method of any of the claims 6 to 8, **characterized in that** the second rotor is positioned in such a way that the leading edges of its blades are arranged in an area in which the shocks are superimposed with wakes from blades of the stator.

## Revendications

1. Procédé pour le positionnement relatif de deux stators successifs dans une turbine haute pression en intercalant un rotor, un champ d'écoulement à travers le premier stator et le rotor étant calculé pour un état de fonctionnement de réglage de la turbine haute pression pour déterminer la position d'un événement dans le champ d'écoulement derrière le rotor, lequel événement comporte la période géométrique du premier stator dans la direction circonférentielle, et le second stator étant positionné par rapport à la position de cet événement au moins pour ce qui concerne les bords d'attaque de ses aubes, **caractérisé en ce que** le champ d'écoulement est calculé pour un état de fonctionnement de réglage transsonique de la turbine haute pression avec un passage transsonique à travers le rotor (3) pour déterminer la position des maxima de pression différentielle (16) des chocs de compression (9) derrière le rotor (3) et **en ce que** le second stator (7) est positionné de telle manière qu'au moins les bords d'attaque (10) de ses aubes (6) ne se trouvent pas dans la zone des maxima de pression différentielle (16).

2. Procédé selon la revendication 1, **caractérisé en ce que** le second stator (7) est positionné dans sa direction circonférentielle (5) et dans sa direction axiale (11) de telle manière qu'au moins les bords d'attaque (10) de ses aubes (6) se trouvent dans la zone des minima de pression différentielle (17) des chocs de compression (9).

3. Procédé selon la revendication 1 ou 2, **caractérisé en ce que** le champ d'écoulement est calculé numériquement comme un champ de pression et/ou de vitesse.

4. Procédé selon l'une quelconque des revendications 1 à 3, **caractérisé en ce que** le second stator (7) est positionné de telle manière que les bords d'attaque (10) de ses aubes se trouvent dans une zone dans laquelle des sillages (12, 13) des aubes (1) du premier stator (2) sont superposés aux chocs de compression (9).

5. Procédé selon l'une quelconque des revendications 1 à 4, **caractérisé en ce que** le second stator (7) est positionné de telle manière que les bords d'attaque (10) de ses aubes (6) se trouvent dans une zone dans laquelle des sillages (14) des aubes (3) du rotor (4) sont superposés aux chocs de compression (9).

6. Procédé pour le positionnement relatif de deux rotors successifs dans une turbine haute pression en intercalant un stator, un champ d'écoulement à travers le premier rotor et le stator étant calculé pour un état de fonctionnement de réglage de la turbine haute pression pour déterminer la position d'un événement dans le champ d'écoulement derrière le stator, lequel événement comporte la période géométrique du premier rotor dans la direction circonférentielle, et le second rotor étant positionné par rapport à la position de cet événement au moins pour ce qui concerne les bords d'attaque de ses aubes, **caractérisé en ce que** le champ d'écoulement est calculé pour un état de fonctionnement de réglage transsonique de la turbine haute pression avec un passage transsonique à travers le rotor pour déterminer la position des maxima de pression différentielle des chocs de compression derrière le stator et **en ce que** le second rotor est positionné de telle manière qu'au moins les bords d'attaque de ses aubes ne se trouvent pas dans la zone des maxima de pression différentielle.

7. Procédé selon la revendication 6, **caractérisé en ce que** le second rotor est positionné dans sa direction circonférentielle et dans sa direction axiale de telle manière qu'au moins les bords d'attaque de ses aubes se trouvent dans la zone des minima de pression différentielle des chocs de compression.

8. Procédé selon la revendication 6 ou 7, **caractérisé en ce que** le champ d'écoulement est calculé numériquement comme un champ de pression et/ou de vitesse.

9. Procédé selon l'une quelconque des revendications 6 à 8, **caractérisé en ce que** le second rotor est positionné de telle manière qu'au moins les bords d'attaque de ses aubes se trouvent dans une zone dans laquelle des sillages des aubes du premier rotor sont superposés aux chocs de compression.

10. Procédé selon l'une quelconque des revendications 6 à 9, **caractérisé en ce que** le second rotor est positionné de telle manière qu'au moins les bords d'attaque de ses aubes se trouvent dans une zone dans laquelle des sillages des aubes du stator sont superposés aux chocs de compression.
